# FASCICULE DE BREVET EUROPEEN

(11) **EP 0 961 890 B1**
(45) Date de publication et mention de la délivrance du brevet: **25.09.2002**
(21) Numéro de dépôt: 98959988.1
(22) Date de dépôt: 15.12.1998
(51) Int. Cl.: F16H 61/02

(54) **PROCEDE DE DETECTION DES SOLS GLISSANTS ET DU BLOCAGE DES ROUES DE VEHICULE, TRANSMISSION AUTOMATIQUE METTANT EN OEUVRE LE PROCEDE ET VEHICULE DOTE D'UNE TELLE TRANSMISSION**
VERFAHREN ZUR ERKENNUNG VON RUTSCHIGEN BODENFLÄCHEN UND DER BLOCKIERUNG DER RÄDER EINES FAHRZEUGES, AUTOMATISCHES GETRIEBE DAS DIESES VERFAHREN ANWENDET UND KRAFTFAHRZEUG DAS MIT SOLCHEM GETRIEBE AUSGESTATTET IST
METHOD FOR DETECTING SLIPPERY SURFACES AND BLOCKED VEHICLE WHEELS, AUTOMATIC TRANSMISSION IMPLEMENTING THE METHOD AND VEHICLE EQUIPPED WITH THE SAME

(30) Priorité: 22.12.1997 FR 9716266
(43) Date de publication de la demande: 08.12.1999
(73) Titulaire: Renault s.a.s., 92100 Boulogne Billancourt (FR); AUTOMOBILES PEUGEOT, 75116 Paris (FR); AUTOMOBILES CITROEN, 92200 Neuilly-sur-Seine (FR)
(72) Inventeur: TAFFIN, Christian, F-78400 Chatou (FR); ARBONA, Jean-Pierre, F-78630 Bures-Morainvilliers (FR)
(74) Mandataire: Kohn, Philippe
(86) Numéro de dépôt international: FR9802731
(87) Numéro de publication internationale: WO99032807

(56) Documents cités:
- EP-A- 0 444 772
- EP-A- 0 503 942
- EP-A- 0 638 742
- DE-A- 3 927 349
- DE-A- 4 226 800
- FR-A- 2 545 567
- US-A- 4 691 812
- PATENT ABSTRACTS OF JAPAN vol. 98, no. 1, 30 janvier 1998 -& JP 09 249050 A (HONDA MOTOR CO LTD), 22 septembre 1997
- PATENT ABSTRACTS OF JAPAN vol. 17, no. 671 (M-1525), 10 décembre 1993 -& JP 05 223157 A (TOYOTA MOTOR CORP), 31 août 1993

## Description

L'invention concerne les transmissions automatiques de véhicules terrestres équipés de boites à rapports étagés ou continus. Elle concerne plus précisément un procédé de détection des sols glissants sur lesquels les roues motrices d'un véhicule ont tendance soit à patiner, soit à se bloquer.

On connaît déjà dans l'état de la technique, une pluralité de procédés de gestion de transmissions automatiques, plus ou moins aptes à prendre en compte des conditions de roulage particulières.

Ainsi, dans le document FR 83 07277 est décrit un procédé de gestion destiné à supprimer le passage intempestif d'un rapport N-1 à un rapport supérieur N, en phase de relevé du pied du conducteur. Cependant, ce document n'aborde pas les problèmes liés au patinage ou au blocage des roues motrices.

Un autre document antérieur, EP-A-0.638.742, décrit le pilotage d'une transmission automatique à l'aide de grandeurs liées à la charge du véhicule, au style de conduite plus ou moins sportif du conducteur, et à l'opportunité d'un changement de rapport. Ces grandeurs sont obtenues par logique floue, en fonction d'une pluralité de paramètres d'entrée, dont les conditions de patinage des roues motrices. Cependant, la façon dont les conditions de patinage ou de blocage des roues sont prises en compte, de même que la détection de l'existence d'un sol glissant, ne sont pas décrites.

En outre, dans la plupart des méthodes connues de gestion des changements de rapports (continus ou discrets) en mode automatique, le conducteur a la possibilité de sélectionner manuellement, à l'aide d'un interrupteur, un mode de conduite particulier adapté aux sols glissants, et généralement appelé le mode « hiver » ou « neige ».

Le document EP-A-0.503.942 présentant toutes les caractéristiques du préambule de la revendication 1 propose un procédé de commande de changement de vitesse pour une transmission automatique, destiné à résoudre le problème du démarrage sur une route glissante présentant un faible coefficient de frottement.

Ce procédé comporte des étapes consistant à détecter la valeur d'un paramètre représentatif du frottement de la surface de la route, et à empêcher la sélection du rapport le plus faible si le frottement est jugé trop faible.

Pour juger que le frottement est faible, il est prévu de calculer le nombre de fois où les valeurs des paramètres qui sont détectées inférieures à un seuil prédéterminé, est lui-même supérieur à un second seuil prédéterminé pendant une première période de temporisation. Dans ce cas, il est prévu d'attendre la fin d'une seconde temporisation pour enclencher le premier rapport de transmission.

Dans ce document, le comptage sur la valeur représentative d'un sol glissant est fait de façon statistique. En conséquence, la détection du caractère glissant ou non de la route manque de finesse et la valeur représentative d'un sol glissant est difficilement exploitable. Un but de l'invention est d'assister le conducteur dans les situations particulières mentionnées précédemment, de façon à garantir une sécurité optimale et le meilleur confort de conduite possible, en remédiant aux inconvénients des systèmes connus.

A cet effet, l'invention propose un procédé comportant des étapes consistant à :
- détecter les conditions de roulage instantanées, à l'aide d'au moins un paramètre représentatif de l'existence ou non d'un sol glissant;
- à partir de cette détection, générer par comptage une valeur représentative de l'évolution des conditions de roulage en fonction du temps;
- comparer ladite valeur à des conditions de référence;
- en fonction du résultat de ladite comparaison, décider si les conditions de roulage instantanées correspondent ou non à un sol glissant,
caractérisé en ce que pour générer par comptage une valeur représentative de l'évolution des conditions de roulage en fonction du temps, à chaque détection du blocage des roues motrices on décrémente périodiquement une valeur courante d'un premier pas (Δx_ΔB), à chaque détection de l'emballement des roues motrices on décrémente périodiquement ladite valeur courante d'un second pas (Δx_ΔE), et en l'absence de blocage ou d'emballement des roues on incrémente périodiquement ladite valeur courante d'un troisième pas (Δx_sortie).

Selon d'autres caractéristiques du procédé :
- lesdites conditions de référence auxquelles on compare la valeur représentative de l'évolution des conditions de roulage sont constituées par un seuil inférieur (S1) et par un seuil supérieur (S2), et l'on décide que le sol est glissant lorsque ladite valeur devient inférieure au seuil inférieur (S1), et l'on décide que le sol n'est pas glissant lorsque ladite valeur devient supérieure au seuil supérieur (S2).
- avantageusement, le seuil inférieur (S1 ) et le seuil supérieur (S2) sont variables dans le temps, et sont fixés en fonction du style de conduite du conducteur ;
- de préférence, le pas d'incrémentation (Δx_sortie) est fixé en fonction du style de conduite du conducteur.

L'invention prévoit, lorsqu'un sol glissant est détecté, d'effectuer au moins l'une des actions suivantes :
- basculer la transmission automatique dans un mode de fonctionnement de sécurité, assurant la motricité du véhicule, notamment le mode dit « neige »;
- activer à l'égard du conducteur un témoin représentatif du mode de sécurité retenu;
- maintenir le rapport courant lors des freinages, de façon à ne pas rétrograder en cas de blocage des roues.

Afin d'obtenir le résultat escompté, l'invention repose donc en premier lieu sur un principe de détection du sol glissant, basé essentiellement sur l'analyse du gradient d'un paramètre représentatif de la vitesse des roues motrices. Cette analyse permet d'activer automatiquement un mode spécifique de gestion des rapports de la transmission, adapté à la faible adhérence, ce qui assure d'une part une sécurité accrue pour le conducteur, et d'autre part un confort de conduite optimisé par rapport aux conditions spécifiques de roulage.

Le basculement automatique en mode « neige » permet au conducteur d'obtenir une gestion optimisée des rapports de la transmission automatique, pour les conditions de roulage rencontrées sur sol glissant.

Ceci permet par exemple, lors des démarrages avec patinage, d'être sur un rapport de transmission qui assure de la motricité au véhicule, et qui lors des blocages de roues, permet de ne pas engager des rapports faibles à grande vitesse, ce qui serait contre-indiqué du point de vue de la sécurité.

En outre, afin de détecter une condition de blocage des roues motrices, on analyse, lors des freinages, la dérivée d'une grandeur caractéristique de la rotation des roues motrices, et on détecte un blocage de roues si le frein est actif et si ladite dérivée est négative et inférieure à un seuil (Sb) représentatif du blocage.

Par ailleurs, pour détecter la fin d'une condition de blocage, le procédé selon l'invention comporte les étapes suivantes:
- (C1): tester si le frein est relâché et si la vitesse du véhicule est inférieure à un premier seuil (Svv1), et dans l'affirmative, lancer une première temporisation (T1);
- (C2): tester si la vitesse du véhicule est supérieure à un second seuil (Svv2), ou si le rapport de transmission sélectionné est supérieur ou égal au rapport courant, et dans l'affirmative, lancer une seconde temporisation (T2);
- (C3): tester si l'une desdites temporisations (T1,T2) est écoulée, si la transmission automatique est en position P, R, ou N, ou si le « kick-down » est activé,
- et si l'une de ces conditions (C1,C2,C3) est réalisée, détecter la fin d'une condition de blocage des roues motrices.

L'invention concerne également une transmission automatique mettant en oeuvre les procédés ci-dessus de contrôle, ainsi qu'un véhicule automobile à boîte de vitesse automatique à rapports étagés, pourvu d'une telle transmission automatique.

L'invention sera mieux comprise et d'autres avantages de l'invention apparaîtront à la lecture de la description suivante faite à titre d'exemple non limitatif et aux dessins annexés, dans lesquels :
- la figure 1 représente un schéma de principe des étapes du procédé de détection de route glissante selon l'invention, ainsi que les paramètres d'entrée et de sortie utilisés par le procédé ;
- la figure 2 représente le principe de reconnaissance de l'état de la route glissante, par gestion d'un compteur de reconnaissance qui est décrémenté ou incrémenté selon les circonstances de roulage ;
- la figure 3 représente le principe de détection de l'état de la route glissante, en fonction de l'état du compteur de reconnaissance du sol glissant par rapport à des seuils prédéterminés ;
- la figure 4 représente dans un graphe de l'angle d'ouverture du papillon des gaz en fonction de la vitesse du véhicule, un cycle caractéristique du problème de rétrogradage des rapports lors des blocages des roues, inhérent au principe même de gestion des rapports des transmissions automatiques.

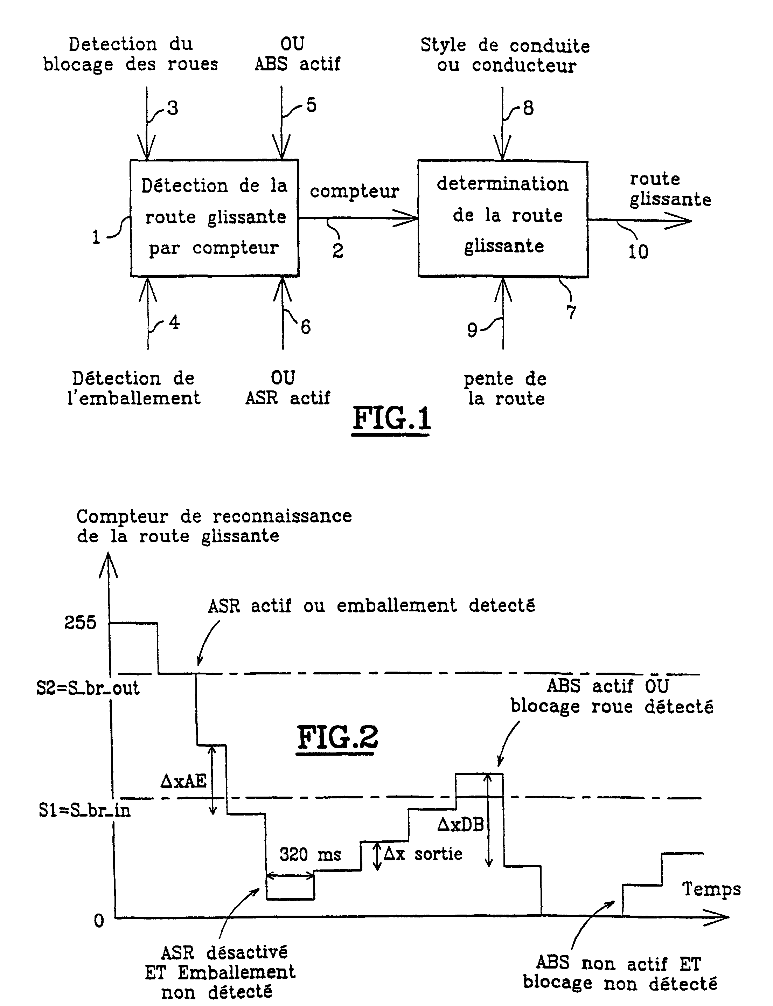

On se réfère à la figure 1. On a représenté le procédé de détection de sols glissants sous la forme de deux blocs fonctionnels interconnectés, représentant les principales étapes du procédé de détection. Chaque bloc fonctionnel reçoit des entrées et génère une sortie qui est adressée au bloc suivant, la sortie du dernier bloc représentant l'information recherchée, à savoir le caractère glissant ou non de la route.

Un premier bloc fonctionnel 1 correspond à une première étape du procédé de détection de sol glissant, qui consiste à générer une valeur d'un compteur, dont l'évolution et l'état instantané quantifient la nature plus ou moins glissante du sol, tel que cela sera expliqué plus en détail plus loin.

Pour construire la valeur de sortie en 2 du compteur de reconnaissance de la route glissante, on utilise en entrée 3 du bloc fonctionnel 1 une information de détection de blocage des roues motrices, disponible par ailleurs, et en entrée 4 du bloc fonctionnel 1, une information de détection de l'emballement des roues motrices du véhicule, également disponible par ailleurs, de façon connue, par exemple au niveau d'un dispositif de détection et de régulation du patinage (ASR).

En variante, il est possible d'utiliser en 5, à la place de l'information de détection du blocage des roues, une information d'« ABS actif » (si l'option ABS dite d'antiblocage des roues est présente sur le véhicule), et d'autre part en 6, à la place de l'information de détection de l'emballement des roues, une information d'« ASR actif » (si l'option ASR, dite d'antipatinage des roues, est présente sur le véhicule).

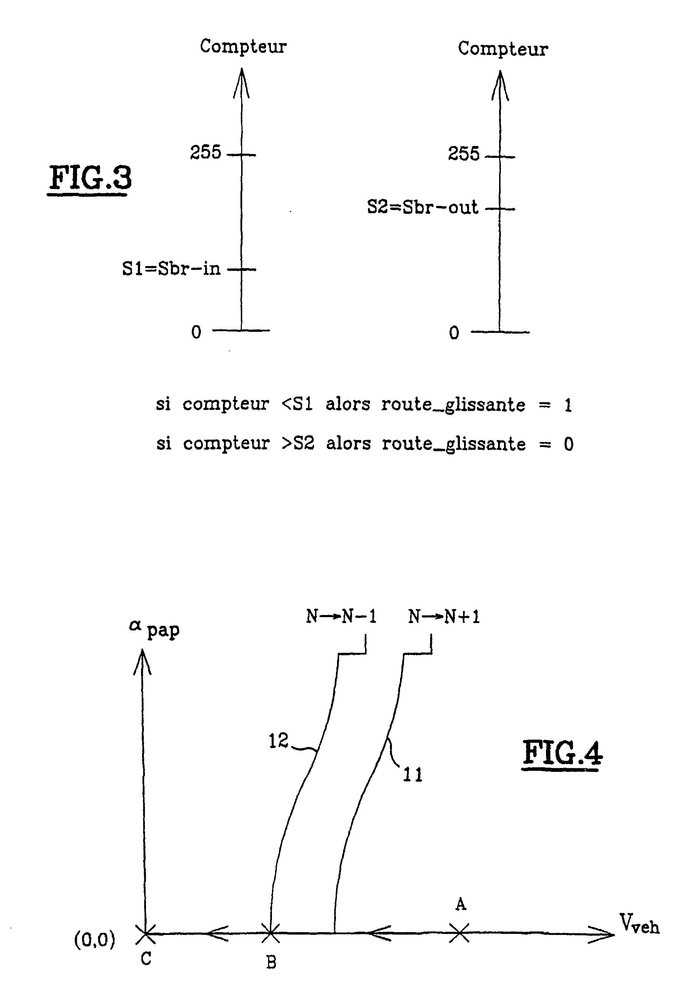

Ensuite, dans une seconde étape du procédé de détection des sols glissants, un second bloc fonctionnel 7 détermine, en fonction de la valeur en sortie 2 du compteur de reconnaissance du sol glissant, si la route est glissante ou non, compte tenu de paramètres externes (8,9) fournis au bloc fonctionnel 7. A cet effet, pour déterminer si la route est glissante ou non, on procède par comparaison de la valeur instantanée du compteur (en 2), avec des seuils S1, S2 prédéterminés, comme cela sera expliqué en relation avec la figure 3.

Lorsque le résultat de cette comparaison indique que la route est reconnue glissante, les actions suivantes, séparées ou en combinaison, sont décidées au niveau du calculateur de la transmission:
a) basculement en mode dit « neige » pour le confort et la sécurité de conduite. Dans ce mode, seuls des rapports plus élevés sont disponibles pour la transmission, qui transmet alors un couple plus modéré aux roues, les empêchant de patiner.
b) allumage du témoin « neige » s'il est disponible, ce qui permet d'alerter le conducteur sur l'état glissant de la route;
c) suppression de la fonction de « rétrogradage anticipé lors des freinages », si elle est disponible dans le calculateur, ce qui permet de limiter le frein moteur, et par conséquent, le couple de freinage aux roues, pour des raisons de sécurité, comme le fait d'éviter le blocage.

On se réfère à la figure 2 pour une description plus détaillée de l'obtention de l'état de sortie du compteur de reconnaissance (en 2) et de son utilisation pour déterminer le caractère glissant ou non de la route.

On a porté dans cette figure, en abscisse le temps, et en ordonnée, la valeur du compteur de reconnaissance de route glissante, en fonction du temps. En partant d'une valeur initiale donnée, par exemple une valeur maximale de 255, correspondant à un codage sur 8 bits de la valeur du compteur, on détermine la valeur instantanée du compteur de reconnaissance de la manière suivante:
- lorsque l'emballement des roues motrices est détecté en 4 ou lorsque l'antipatinage ASR en 6 (si disponible sur le véhicule) est en cours d'intervention, alors le compteur de détection de route glissante est décrémenté d'un pas forfaitaire Δx_ΔE, toutes les 320 ms par exemple;
- lorsque le blocage des roues motrices est détecté en 3, ou lorsque l'antiblocage ABS en 5 (si présent sur le véhicule) est en cours d'intervention, le compteur de reconnaissance de route glissante est décrémenté d'un pas forfaitaire Δx_ΔB;
- lorsqu'il n'y a pas de détection d'emballement et que l'ASR est désactivé, ou lorsqu'il n'y a pas de détection de blocage et que l'ABS est désactivé, alors le compteur de reconnaissance de la route glissante est ré-incrémenté avec un pas noté Δx_sortie, signifiant qu'on s'éloigne d'une décision de « route glissante ».

Il est à noter que les décréments Δx_ΔE et Δx_ΔB représentent un déplacement en tendance vers une décision de « route glissante ». En outre, le fait de prévoir des pas de décrémentation Δx_ΔE, Δx_ΔB différents en cas d'emballement des roues et en cas de blocage, permet notamment d'obtenir une sensibilité différente de la détection de la route glissante selon la situation que provoque le conducteur (blocage ou emballement). Les valeurs de pas Δx_ΔE, Δx_ΔB et Δx_sortie peuvent aisément être choisies par l'homme du métier, en tenant compte bien entendu de l'échelle de valeurs du compteur disponibles, à savoir 256 valeurs dans l'exemple décrit.

En outre, le choix de deux seuils S1,S2 différents pour l'entrée et la sortie de la condition de route glissante, induit un effet d'hystérésis, qui permet d'éviter tout phénomène de pompage entre deux états de la transmission automatique.

Par ailleurs, on peut très bien envisager d'avoir des pas de décrémentation qui sont également fonction du style de conduite du conducteur, par exemple pour le conducteur qui crée plus facilement des emballements et des blocages de roue, qu'un autre conducteur plus calme, et pour ce dernier, on peut rendre la reconnaissance de route glissante moins sensible.

De même, le pas d'incrémentation Δx_sortie pourrait également dépendre du style de conduite du conducteur pour ne pas rester en mode « neige » trop longtemps, si le conducteur est « sportif ». Le procédé de détection de route glissante selon l'invention laisse donc une place pour des réglages individualisés, éventuellement de façon adaptative.

De façon similaire, si une forte descente est détectée, les risques de blocage des roues sont accrus et on peut dans ce cas désensibiliser la reconnaissance de la route glissante vis à vis de la détection du blocage des roues, qui est alors privilégié.

On se réfère à la figure 3 qui donne les seuils d'entrée et de sortie dans l'état de route dite glissante. Ainsi, lorsque le compteur de reconnaissance d'état glissant devient progressivement inférieur à un premier seuil de détection noté S1 = Sbr_in, (également représenté en trait interrompu sur la figure 2), alors la route est détectée comme étant glissante, et on prend par exemple une des mesures (a,b,c) décrites plus haut.

Lorsqu'en partant d'une valeur basse (inférieure à S1) le compteur redevient supérieur à un second seuil de détection noté S2 = Sbr_out, alors la route est détectée comme n'étant plus glissante, et on peut annuler les mesures de sécurité (a,b,c) prises précédemment. L'introduction d'un tel phénomène d'hystérésis entre l'entrée en S1 et la sortie en S2 de l'état dit glissant, permet d'éviter les phénomènes d'oscillations relatifs à la détection, ainsi que de gérer indépendamment l'entrée et la sortie dans le mode de détection considéré.

Comme on l'a vu, le procédé de détection de sols glissants selon l'invention fait appel notamment à une étape de détection de blocage des roues motrices. On va maintenant décrire un mode de réalisation de ce procédé de détection de blocage, en relation avec la figure 4, étant entendu que d'autres procédés de détection de blocage de roues motrices peuvent être envisagés sans nuire à la généralité du procédé de détection de sols glissants décrit plus haut.

Dans la plupart des stratégies de gestion des changements de rapports en mode automatique, les rapports sont décidés en fonction de la vitesse du véhicule et de la charge du moteur. Le plus souvent, ces critères sont traduits sous forme de lois de changement de rapports, commodément visualisées dans un plan Vveh / αpap, Vveh désignant la vitesse du véhicule, et αpap l'angle d'ouverture de papillon, ou plus généralement, l'ouverture de l'organe de régulation de l'admission du combustible au moteur.

Ainsi, le conducteur qui roule à une certaine vitesse V, sur le rapport N, va lorsqu'il freine par exemple sur un sol à faible adhérence en provoquant un blocage des roues motrices, croiser la courbe de rétrogradage 12 de la figure 4 au point B. Ceci génère un rétrogradage d'un premier rapport, et ainsi de suite jusqu'au blocage complet des roues correspondant au point C, où le rapport de 1ère sera engagé (pour une boite à rapports étagés), ou bien le rapport minimum (pour une boite à rapports continus). Ceci est très dangereux pour le conducteur, car il existe la possibilité de générer un ou même plusieurs rétrogradages intempestifs suite à un blocage des roues, notamment à haute vitesse.

La présente invention a donc également pour objet de corriger ce défaut, en évitant les rétrogradages habituellement entraînés par la détection du blocage des roues, et en permettant au conducteur de repartir sur le « bon » rapport lorsque le blocage des roues n'est plus détecté. En plus de la sécurité, cet aspect de l'invention améliore notablement l'agrément de conduite, puisqu'il évite un frein moteur brutal et une possible perte de contrôle lors du blocage des roues.

La détection du blocage des roues repose essentiellement sur l'analyse de la dérivée d'une grandeur caractéristique de la rotation des roues motrices (à partir d'un capteur de la vitesse du véhicule ou d'un capteur de vitesse de turbine de convertisseur de couple) lors des freinages.

A titre d'exemple, le principe de la détection du blocage des roues motrices est basé sur l'analyse de la vitesse de rotation des roues motrices. Cela permet de gérer convenablement les rapports lors des phases de blocage des roues, et de ne pas rétrograder les rapports de façon intempestive, notamment à haute vitesse. Cela garantit une sécurité de conduite plus élevée, notamment sur sol glissant ou à faible adhérence comme décrit précédemment.

Le tableau 1 suivant représente sous forme de fonction, le principe de détection du blocage des roues, avec des conditions d'entrée dans la fonction de détection, des actions qui sont décidées en cas de détection de blocage, ainsi que les conditions de sortie de la détection du blocage des roues.

### TABLEAU 1: FONCTION DE DETECTION DU BLOCAGE DES ROUES

| | |
|---|---|
| Conditions d'entrée | frein actif et dVveh/dt < Seuil_Blocage < 0 |
| Actions | Imposition du rapport 3 si on est en rapport 4, sinon maintien du rapport courant « Rapport_Courant » |
| Conditions de sortie | C1: {si frein relâché et Vveh < Svv1} alors {lancement de temporisation T1} |
| | C2: {si Vveh > Svv2 ou si Rapport_Sélect ≥ Rapport_Courant} alors lancement de temporisation T2 |
| | C3: {T1 terminée} OU {T2 terminée} OU {Levier = P,R ou N} OU {« kick-down » activé} |

On se réfère au tableau 1. Selon l'invention, lorsque le conducteur freine et que les roues se bloquent, l'observation de la dérivée de la vitesse du véhicule permet de détecter rapidement le blocage des roues motrices, qui correspond à la condition dVveh/dt < Seuil_Blocage < 0. Selon le procédé de détection de blocage des roues, l'action en réponse à la détection consiste à maintenir le rapport courant, ce qui permet de ne pas rétrograder tous les rapports (jusqu'au premier éventuellement). Simultanément, les conditions C1,C2,C3 de sortie de cet état de maintien du rapport sont testées en continu.

La condition (C1) permet de sortir de la condition de détection du blocage des roues, lorsque le frein est relâché, puisque dans ce cas il ne peut y avoir de blocage des roues. Si pendant un certain temps T1, la vitesse du véhicule reste inférieure à un seuil SVV1 (seuil minimal calibrable par exemple), cela signifie que le véhicule est effectivement à l'arrêt, et la détection du blocage des roues peut cesser. Le rapport correspondant à la vitesse nulle sera alors engagé.

Par contre, la condition (C2) permet par exemple, lorsque le conducteur lâche le frein après un blocage des roues, d'attendre que la vitesse reprenne son point de fonctionnement « normal » selon les lois de passage de rapports, ce qui est géré également par une temporisation T2 (de l'ordre de 300 à 500 ms en pratique). Cela permet au véhicule de repartir sur le « bon » rapport de transmission, ce qui accroît l'agrément de conduite.

Les différentes étapes du procédé de détection de sols glissants selon l'invention pourront être mises en oeuvre par un système de gestion électronique des transmissions automatiques, qui est à la portée de l'homme du métier, notamment par adaptation de systèmes de gestion existants. Ce système ne sera de ce fait pas décrit en lui-même.

La condition (Rapport_Sélect ≥ Rapport_courant) signifie que, si le rapport qui est proposé par les lois de passage est supérieur ou égal au rapport courant, la détection du blocage des roues peut cesser. D'autres conditions peuvent également être prises en compte comme par exemple, en C3, les positions du levier de commande (P,R ou N), ou encore le « kick-down » (en terminologie anglo-saxonne), si le conducteur souhaite rétrograder, ce qui est une condition de sécurité.

Selon une autre caractéristique du procédé de détection de blocage, pour déterminer la condition d'entrée en phase de blocage des roues, il est également possible d'observer les variations d'une grandeur significative de la rotation de la turbine de convertisseur de couple, en complément ou bien à la place de la vitesse du véhicule, à condition toutefois que le seuil de blocage soit dépendant du rapport courant.

En définitive, le procédé selon l'invention permet de détecter les sols glissants et de réagir à cette détection en imposant à la transmission automatique des conditions de fonctionnement aptes à augmenter aussi bien la sécurité du conducteur que l'agrément de conduite.

## Revendications

1. Procédé de détection des sols glissants, destiné à être mis en oeuvre dans un véhicule à transmission automatique, comportant des étapes consistant à:
- détecter les conditions de roulage instantanées;
- à partir de cette détection, générer par comptage une valeur représentative de l'évolution des conditions de roulage en fonction du temps;
- comparer ladite valeur à des conditions de référence;
- en fonction du résultat de ladite comparaison, décider si les conditions de roulage instantanées correspondent ou non à un sol glissant,
**caractérisé en ce que** la détection des conditions de roulage instantanées se fait par détection du blocage des roues motrices, et/ou par détection de l'emballement des roues motrices du véhicule et **en ce que** pour générer par comptage une valeur représentative de l'évolution des conditions de roulage en fonction du temps, à chaque détection du blocage des roues motrices on décrémente périodiquement une valeur courante d'un premier pas (Δx_ΔB), à chaque détection de l'emballement des roues motrices on décrémente périodiquement ladite valeur courante d'un second pas (Δx_ΔE), et en l'absence de blocage ou d'emballement des roues on incrémente périodiquement ladite valeur courante d'un troisième pas (Δx_sortie).

2. Procédé selon la revendication 1, **caractérisé en ce** lesdites conditions de référence auxquelles on compare la valeur représentative de l'évolution des conditions de roulage sont constituées par un seuil inférieur (S1) et par un seuil supérieur (S2), et en ce que l'on décide que le sol est glissant lorsque ladite valeur devient inférieure au seuil inférieur (S1), et que l'on décide que le sol n'est pas glissant lorsque ladite valeur devient supérieure au seuil supérieur (S2).

3. Procédé selon la revendication 2, **caractérisé en ce que** le seuil inférieur (S1) et le seuil supérieur (S2) sont variables dans le temps, et sont fixés en fonction du style de conduite du conducteur.

4. Procédé selon la revendication 2 ou la revendication 3, **caractérisé en ce que** le pas d'incrémentation (Δx_sortie) est fixé en fonction du style de conduite du conducteur.

5. Procédé selon l'une quelconque des revendications précédentes, **caractérisé en ce que**, lorsqu'un sol glissant est détecté, on effectue au moins l'une des actions suivantes:
- basculer la transmission automatique dans un mode de fonctionnement de sécurité, assurant la motricité du véhicule, notamment le mode dit « neige »;
- activer à l'égard du conducteur un témoin représentatif du mode de sécurité retenu;
- maintenir le rapport courant lors des freinages, de façon à ne pas rétrograder en cas de blocage des roues.

6. Procédé selon l'une quelconque des revendications précédentes, **caractérisé en ce que** pour détecter une condition de blocage des roues motrices, on analyse, lors des freinages, la dérivée d'une grandeur caractéristique de la rotation des roues motrices, et on détecte un blocage de roues si le frein est actif et si ladite dérivée est négative et inférieure à un seuil (Sb) représentatif du blocage.

7. Procédé selon la revendication 6, **caractérisé en ce que** ladite grandeur caractéristique de la rotation des roues motrices est la vitesse du véhicule, ou la vitesse de la turbine du convertisseur de couple.

8. Procédé selon l'une des revendications 6 ou 7, **caractérisé en ce qu'**il comporte les étapes suivantes:
- (C1): tester si le frein est relâché et si la vitesse du véhicule est inférieure à un premier seuil (Svv1), et dans l'affirmative, lancer une première temporisation (T1);
- (C2): tester si la vitesse du véhicule est supérieure à un second seuil (Svv2), ou si le rapport de transmission sélectionné est supérieur ou égal au rapport courant, et dans l'affirmative, lancer une seconde temporisation (T2);
- (C3): tester si l'une desdites temporisations (T1,T2) est écoulée, si la transmission automatique est en position P, R, ou N, ou si le « kick-down » est activé,
- et si l'une de ces conditions (C1,C2,C3) est réalisée, détecter la fin d'une condition de blocage des roues motrices.

9. Transmission automatique, **caractérisée en ce qu'**elle met en oeuvre le procédé de détection de sol glissant et/ou le procédé de détection de blocage de roues, selon l'une quelconque des revendications précédentes.

10. Véhicule automobile à boîte de vitesse automatique à rapports étagés, **caractérisé en ce qu'**il comporte une transmission automatique selon la revendication 9.

## Patentansprüche

1. Verfahren zur Erkennung von rutschigen Bodenflächen, das bei einem Fahrzeug mit automatischem Getriebe zum Einsatz kommt und die folgenden Schritte umfasst:
- die momentanen Rollzustände werden erfasst;
- ausgehend von dieser Erfassung wird mittels Zählung ein Wert erzeugt, der für den Verlauf der Rollzustände im Zeitverlauf repräsentativ ist;
- dieser Wert wird mit Referenzzuständen verglichen;
- in Abhängigkeit vom Ergebnis dieses Vergleichs wird bestimmt, ob die momentanen Rollzustände einer rutschigen Bodenfläche entsprechen oder nicht;
**dadurch gekennzeichnet, dass** die Erfassung der momentanen Rollzustände durch Erfassung des Blockierens der angetriebenen Räder und/oder durch Erfassung des Durchdrehens der angetriebenen Räder des Fahrzeugs erfolgt, und dadurch, dass, um durch Zählung einen Wert zu erzeugen, der für den Verlauf der Rollzustände über die Zeit repräsentativ ist, man bei jeder Erfassung eines Blockierens der angetriebenen Räder einen laufenden Wert um eine erste Schrittweite (Δx_ΔB) periodisch vermindert, man bei jeder Erfassung eines Durchdrehens der angetriebenen Räder den laufenden Wert periodisch um eine zweite Schrittweite (Δx_ΔE) vermindert, und man bei Nichtauftreten eines Blockierens oder eines Durchdrehens der Räder den laufenden Wert um eine dritte Schrittweite (Δx_sortie) erhöht.

2. Verfahren nach Anspruch 1, **dadurch gekennzeichnet, dass** die Referenzzustände, mit welchen der Wert verglichen wird, der für den Verlauf der Rollzustände repräsentativ ist, durch eine unteren Schwellenwert (S1) und durch einen oberen Schwellenwert (S2) gebildet sind, und dass entschieden wird, dass es sich um eine rutschige Bodenfläche handelt, wenn der Wert kleiner wird als ein unterer Schwellenwert (S1), und dass entschieden wird, dass die Bodenfläche nicht rutschig ist, wenn der Wert größer wird als der zweite Schwellenwert (S2).

3. Verfahren nach Anspruch 2, **dadurch gekennzeichnet, dass** der untere Schwellenwert (S1) und der obere Schwellenwert (S2) über die Zeit veränderlich sind und in Abhängigkeit vom Fahrstil des Fahrers festgelegt werden.

4. Verfahren nach Anspruch 2 oder 3, **dadurch gekennzeichnet, dass** die Schrittweite der inkrementalen Erhöhung (Δx_sortie) in Abhängigkeit vom Fahrstil des Fahrers festgelegt wird.

5. Verfahren nach einem der vorhergehenden Ansprüche, **dadurch gekennzeichnet, dass**, wenn eine rutschige Bodenfläche erfasst wurde, mindestens eine der folgenden Aktionen durchgeführt wird:
- das automatische Getriebe wird in einen Sicherheitsbetriebsmodus umgeschaltet, welcher den Vortrieb des Fahrzeugs sicherstellt, insbesondere in einen Modus, der als "Schneemodus" bezeichnet wird;
- es wird eine Kontrollleuchte angeschaltet, die dem Fahrer den eingeschalteten Sicherheitsmodus signalisiert;
- der aktuelle Gang wird im Verlauf von Bremsvorgängen beibehalten, so dass im Fall eines Blockierens der Räder nicht zurückgeschaltet wird.

6. Verfahren nach einem der vorhergehenden Ansprüche, **dadurch gekennzeichnet, dass**, um einen Zustand des Blockierens der angetriebenen Räder zu Erfassen, während Bremsvorgängen die Ableitung eines für die Drehung der angetriebenen Räder charakteristischen Werts analysiert wird, und ein Blockieren der Räder erfasst wird, wenn die Bremse aktiv ist und wenn diese Ableitung negativ und kleiner ist als ein für ein Blockieren repräsentativer Schwellenwert (Sb).

7. Verfahren nach Anspruch 6, **dadurch gekennzeichnet, dass** die für die Drehung der angetriebenen Räder charakteristische Größe die Geschwindigkeit des Fahrzeugs oder die Geschwindigkeit der Turbine des Drehmomentwandlers ist.

8. Verfahren nach einem der Ansprüche 6 oder 7, **dadurch gekennzeichnet, dass** es die folgenden .Schritte umfasst:
- (C1): es wird überprüft, ob die Bremse gelöst ist und ob die Geschwindigkeit des Fahrzeugs unterhalb eines ersten Schwellenwertes (Svv1) liegt, und falls dies zutrifft, wird eine erste Verweildauer (T1) eingelegt;
- (C2): es wird überprüft, ob die Geschwindigkeit des Fahrzeugs oberhalb eines zweiten Schwellenwertes (Svv2) liegt, oder ob die gewählte Gangstufe des Getriebes größer oder gleich der aktuellen Gangstufe ist, und im zutreffenden Fall wird eine zweite Verweildauer (T2) eingelegt;
- (C3): es wird überprüft, ob eine der Verweildauern (T1, T2) abgelaufen ist, ob sich das automatische Getriebe in der Position P, R oder N befindet, oder ob der "Kickdown" aktiviert ist;
- und wenn eine dieser Bedingungen (C1, C2, C3) zutrifft, wird das Ende eines Blockierzustandes der angetriebenen Räder erfasst.

9. Automatisches Getriebe, **dadurch gekennzeichnet, dass** es das Verfahren zur Erkennung einer rutschigen Bodenfläche und/oder das Verfahren zur Erkennung eines Blockierens der Räder gemäß einem der vorhergehenden Ansprüche durchführt.

10. Kraftfahrzeug mit automatischem Gangstufengetriebe, **dadurch gekennzeichnet, dass** das Fahrzeug ein automatisches Getriebe nach Anspruch 9 aufweist.

## Claims

1. Method for detecting slippery ground, intended to be implemented in a vehicle with automatic transmission, comprising steps consisting in :
- detecting the instantaneous running conditions ;
- on the basis of this detection, generating, by counting, a value that represents the change in running conditions as a function of time ;
- comparing the said value with reference conditions ;
- as a function of the result of the said comparison, deciding whether or not the instantaneous running conditions correspond to slippery ground,
**characterised in that** detecting the instantaneous running conditions is realised by detecting the locking of the driving wheels and/or by detecting that the driving wheels of the vehicles are spinning, and **in that** in order to generate, by counting, a value that represents the change in running conditions as a function of time, each time locking of the driving wheels is detected a current value is periodically decremented by a first step (Δ*x*_Δ*B*), each time the spinning of the wheels is detected the said current value is periodically decremented by a second step (Δ*x*_Δ*E*), and when the wheels are not locked or spinning the said current value is incremented by a third step (Δ*x*_*out*).

2. Method according to claim 1, **characterised in that** the said referenced conditions with which the value representing the change in running conditions is compared consist of a lower threshold (S1) and an upper threshold (S2), and it is decided that the ground is slippery when the said value becomes lower than the lower threshold (S1), and it is decided that the ground is not slippery when the said value becomes higher than the upper threshold (S2).

3. Method according to claim 2, **characterised in that** the lower threshold (S1) and the upper threshold (S2) are variable over time and are set as a function of the driver's driving style.

4. Method according to claim 2 or claim 3, **characterised in that** the incrementation step (Δ*x*_*out*) is set as a function of the driver's driving style.

5. Method according to anyone of the preceding claims, **characterised in that**, when slippery ground is detected, at least one of the following actions is taken :
- the automatic transmission is switched into a safety operating mode, particularly the so-called "snow" mode to-provide drive to the vehicle ;
- an indicator alerting the driver to the fact that the safety mode has been adopted is activated ;
- the function of down-shifting early under braking is maintained so as not to down-shift if the wheels are locked.

6. Method according to anyone of the preceding claims, **characterised in that** in order to detect a condition in which the driving wheels are locked up, the derivative of a characteristic variable of the rotation of the driving wheels is analysed under braking, and a locking of wheels is detected if the brake is active and if the said derivative is negative and below a threshold (Sb) representative of locking.

7. Method according to claim 6, **characterised in that** the said characteristic variable of the rotation of the driving wheels is the vehicle speed or the speed of the torque converter turbine.

8. Method according to either of claims 6 and 7, **characterised in that** it comprises the following steps :
- (C1): testing whether the brake is released and whether the vehicle speed is below a first threshold (Svv1) and, if these conditions are satisfied, starting a first time delay (T1) ;
- (C2) : testing whether the vehicle speed is above a second threshold (Svv2) or whether the selected transmission ratio is higher than or equal to the current ratio and, if one of these conditions is satisfied, starting a second time delay (T2) ;
- (C3) : testing whether one of the said time delays (T1, T2) has elapsed, whether the automatic transmission is in the P, R or N position, or whether the "kick-down" is activated,
- and if one of these conditions (C1, C2, C3) is satisfied, detecting the end of a condition in which the driving wheels are locked.

9. Automatic transmission, **characterised in that** it employs the method for detecting slippery ground and/or the method for detecting the locking of wheels according to anyone, of the preceding claims.

10. Motor vehicle with an automatic gearbox with discrete gear ratios, **characterised in that** it comprises an automatic transmission according to claim 9.
